# FASCICULE DE BREVET EUROPEEN

(11) **EP 2 761 354 B1**
(45) Date de publication et mention de la délivrance du brevet: **20.02.2019**
(21) Numéro de dépôt: 12770105.0
(22) Date de dépôt: 01.10.2012
(51) Int. Cl.: G02B 15/00, B60K 35/00, G09G 5/00, G02B 27/01

(54) **DISPOSITIF D'AFFICHAGE, NOTAMMENT POUR VEHICULE AUTOMOBILE**
ANZEIGEVORRICHTUNG, IM BESONDEREN FÜR EIN KRAFTFAHRZEUG
DISPLAY DEVICE, IN PARTICULAR FOR MOTOR VEHICLE

(30) Priorité: 01.10.2011 DE 102011114785; 12.03.2012 FR 1200745
(43) Date de publication de la demande: 06.08.2014
(73) Titulaire: Johnson Controls Automotive Electronics SAS, 95892 Cergy-Pontoise Cedex (FR)
(72) Inventeur: GALL, Hugues, F-78630 Orgeval (FR)
(74) Mandataire: Schwöbel, Thilo K.
(86) Numéro de dépôt international: PCT/EP2012/069369
(87) Numéro de publication internationale: WO 2013/045705

(56) Documents cités:
- EP-A1- 2 351 544
- JP-A- 2001 343 929
- JP-A- 2003 175 744
- US-A1- 2009 160 736

## Description

La présente invention concerne un dispositif d'affichage, notamment pour véhicule automobile.

Des dispositifs d'affichage du type tête haute (HUD, head up display) sont connus, notamment avec la projection d'une image vers un pare-brise comme décrit dans le document US 5214413 ou dans le document WO 2007/090824 A1. Il est avantageux si l'image projetée, du dispositif d'affichage du type tête haute, peut être adapté d'une manière flexible à différents besoins d'utilisateurs, notamment de conducteurs d'un véhicule automobile. Les documents JP2003175144A et US2009/010736A1 décrivent des afficheurs tête haute permettant de varier la taille de l'image projetée.

Un inconvénient de tels dispositifs selon l'art connu consiste dans le fait qu'un chemin optique qui fait qu'une image générée par un module de projection est visible pour un utilisateur du dispositif d'affichage et généralement peu variable ou même non variable.

La présente invention a notamment pour but de palier aux inconvénients de l'art connu, et notamment ceux cités ci-dessus, et a également pour but de proposer un dispositif d'affichage qui est capable d'être adapté à différents besoins de différents utilisateurs d'un véhicule automobile.

Suivant la présente invention, ce but est atteint par un dispositif d'affichage, notamment pour véhicule automobile, comprenant
-- un module de projection et
-- un chemin optique
le chemin optique comprenant au moins un élément de réflexion,
l'élément de réflexion étant prévu pour réfléchir au moins partiellement une image provenant du module de projection dans une direction normale de regard d'un utilisateur du dispositif d'affichage,
l'image provenant du module de projection étant générée par le module de projection,
le dispositif d'affichage étant prévu pour être opéré dans un premier mode d'opération et dans un deuxième mode d'opération,
une première configuration du chemin optique étant appliquée dans le premier mode d'opération du dispositif d'affichage, et une deuxième configuration du chemin optique étant appliquée dans le deuxième mode d'opération du dispositif d'affichage, et
dans le deuxième mode d'opération du dispositif d'affichage, au moins une partie de l'image générée par le module de projection étant visible pour l'utilisateur du dispositif d'affichage de manière agrandie par rapport au premier mode d'opération du dispositif d'affichage.

De par une telle réalisation d'un dispositif d'affichage, il est avantageusement possible de rendre l'utilisation du dispositif d'affichage plus flexible et notamment plus adapté à des personnes ayant des besoins d'affichage spéciaux, par exemple des personnes qui ont des capabilités de vue réduite.

Un perfectionnement de l'invention réside dans le fait que dans le deuxième mode d'opération du dispositif d'affichage, seulement une partie de l'image générée par le module de projection est visible pour l'utilisateur du dispositif d'affichage.

De par une telle réalisation d'un dispositif d'affichage, il est avantageusement possible selon la présente invention que le chemin optique peut être prévu dans le premier mode d'opération du dispositif d'affichage ainsi que dans le deuxième mode d'opération du dispositif d'affichage que la même taille du champ de vue est réalisée pour un conducteur. Seulement, au lieu par exemple de représenter pour l'utilisateur l'image complète générée par un module de projection, une partie seulement de cette image est transmise par le chemin optique dans le champ de vision de l'utilisateur du dispositif d'affichage.

Un perfectionnement particulièrement préféré de l'invention réside dans le fait que dans le deuxième mode d'opération du dispositif d'affichage, toute l'image générée par le module de projection est visible pour l'utilisateur du dispositif d'affichage.

De par une telle réalisation d'un dispositif d'affichage, il est avantageusement possible de représenter toute l'image générée par le module de projection pour être affichée ou projetée dans le champ de vision de l'utilisateur du dispositif d'affichage.

Un autre perfectionnement préféré de l'invention réside dans le fait
-- que l'image générée par le module de projection est une image comprenant un premier nombre d'éléments d'image (pixel) dans une première direction de l'image et comprenant un deuxième nombre d'éléments d'image (pixel) dans une deuxième direction de l'image, et
-- que dans le deuxième mode d'opération du dispositif d'affichage, un troisième nombre d'éléments d'image dans la première direction de l'image et un quatrième nombre d'éléments d'image dans la deuxième direction de l'image est visible pour l'utilisateur du dispositif d'affichage, le troisième nombre d'éléments d'image étant inférieure au premier nombre d'éléments d'image et/ou le quatrième nombre d'éléments d'image étant inférieure au deuxième nombre d'éléments d'image.

De par une telle réalisation du dispositif d'affichage selon la présente invention, il est avantageusement possible de réaliser le chemin optique de manière relativement simple de sorte à simplement augmenter le facteur d'agrandissement du chemin optique tout en réduisant la partie de l'image générée par le module de projection qui est transmise et projetée dans le champ de vision de l'utilisateur du dispositif d'affichage.

Encore un autre perfectionnement de l'invention réside dans le fait que l'information est générée suite à une identification de l'utilisateur du dispositif d'affichage.

De par une telle réalisation du dispositif d'affichage selon la présente invention, il est avantageusement possible de mémoriser le mode d'opération préféré pour différents conducteurs ou pour différentes personnes qui sont des utilisateurs du dispositif d'affichage de telle manière à ce que lors d'une identification d'une personne, le mode d'opération approprié est automatiquement choisi.

Un perfectionnement particulièrement préféré de l'invention réside dans le fait que le dispositif d'affichage comprend un module d'affichage du type à cristaux liquides (LCD).

Un autre perfectionnement préféré de l'invention réside dans le fait que le dispositif d'affichage comprend un module d'affichage du type matriciel.

Un perfectionnement particulièrement préféré de l'invention réside dans le fait que l'élément de réflexion est un élément positionné en écart par rapport à un pare-brise du véhicule automobile.

Encore un autre perfectionnement particulièrement préféré de l'invention réside dans le fait que l'élément de réflexion est prévu escamotable entre, d'une part, une position d'utilisation de l'élément de réflexion, et, d'autre part, une position de repos de l'élément de réflexion.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références au dessin schématique annexé, dans lequel :
La figure 1 est une représentation schématique d'un dispositif d'affichage selon la présente invention,
la figure 2 est une représentation schématique du champ de vue d'un utilisateur du dispositif d'affichage selon la présente invention avec l'image projetée du module de projection, et
la figure 3 est une vue schématique de section d'un dispositif d'affichage selon la présente invention.

### DESCRIPTION DES DESSINS

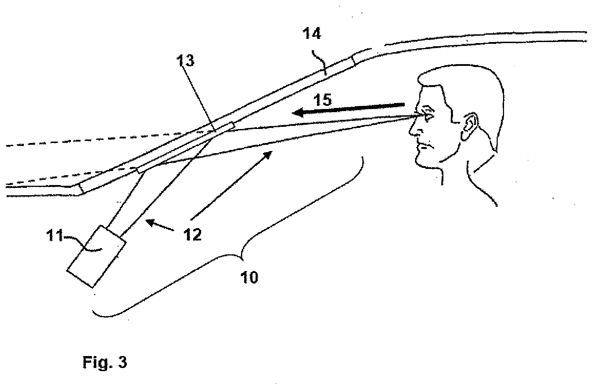

Comme le montre la figure 3 du dessin annexé, un dispositif d'affichage 10 selon la présente invention comprend un module de projection 11 qui génère une image dans la direction normale de regard 15 d'un utilisateur du dispositif d'affichage 10 selon un chemin optique 12. Le chemin optique 12 comprend au moins un élément de réflexion 13. De cette manière, le chemin optique 12 peut comprendre un élément (unique) de réflexion, comme représenté dans la figure 3. Par ailleurs, le chemin optique 12 peut aussi comprendre deux éléments de réflexion (non représenté). Bien évidemment, le dispositif d'affichage 10 peut aussi comprendre - dans une autre variante non représenté dans les figures - plus de deux éléments de réflexion 13.

L'élément de réflexion 13 peut faire partie du pare-brise 14 du véhicule. Dans une autre variante préférée de l'invention, l'élément de réflexion 3 est un élément positionné relativement proche du pare-brise 14, comme c'est représenté dans la figure 3. Dans une autre variante préférée de l'invention (non représentée dans les figures), l'élément de réflexion 13 est un élément positionné nettement en écart par rapport au pare-brise 14.

De préférence, l'élément de réflexion 13 peut être prévu escamotable entre, d'une part, une position d'utilisation de l'élément de réflexion 13, et, d'autre part, une position de repos de l'élément de réflexion 13.

La direction normale de regard 15 est la direction de vue d'un utilisateur du dispositif d'affichage 10, notamment un conducteur de véhicule, lorsque celui-ci regarde, notamment à travers le pare-brise 14, l'extérieur du véhicule automobile qui se trouve par exemple devant le véhicule.

Le dispositif d'affichage 10 selon la présente invention comprend, de préférence dans le module de projection 11, un module d'affichage étant un module d'affichage du type à cristaux liquides (LCD, en anglais: Liquid Crystal Display). Par ailleurs, le module d'affichage peut aussi être un module d'affichage du type matriciel. Il est aussi possible, selon la présente invention, de combiner un module d'affichage du type à cristaux liquides (LCD) avec un module d'affichage du type matriciel, c'est à dire d'utiliser un module d'affichage combiné comprenant une partie du module d'affichage du type à cristaux liquides et une partie du module d'affichage du type matriciel. Selon la présente invention, dans le cas d'un module d'affichage du type matriciel, il est préféré d'utiliser un module d'affichage du type à matrice passive.

Selon la présente invention, le dispositif d'affichage 10 est prévu pour être opérer dans un premier mode d'opération et dans un deuxième mode d'opération, le premier mode d'opération du dispositif d'affichage 10 correspondant à une première configuration du chemin optique 11, et le deuxième mode d'opération du dispositif d'affichage correspondant à une deuxième configuration du chemin optique 11. Pour réaliser cela, le chemin optique 12 comprend au moins un élément variable qui réalise la première et deuxième configuration du chemin optique.

Selon la présente invention, dans le deuxième mode d'opération du dispositif d'affichage, au moins une partie de l'image générée par le module de projection est visible pour l'utilisateur du dispositif d'affichage 10 de manière agrandie par rapport au premier mode d'opération du dispositif d'affichage. Cela veut dire qu'une information, par exemple une information correspondant à l'état du véhicule notamment sa vitesse ou d'autres paramètres comme des indications pour le système de navigation, peut être représentée par le dispositif d'affichage de manière plus grande, notamment pour réaliser une vision meilleure de ces informations pour l'utilisateur du dispositif d'affichage.

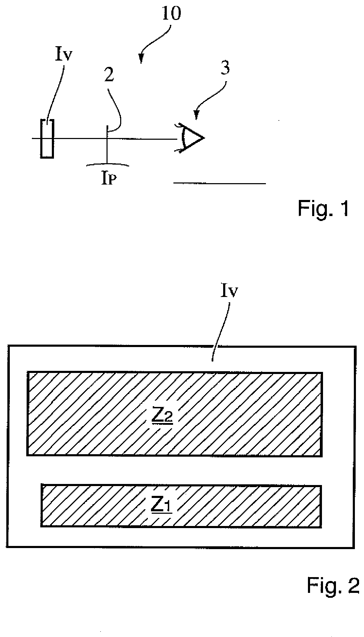

Dans la figure 1, un utilisateur, représenté par l'intermédiaire d'un oeil 3 peut voir une image virtuelle IV qui est réalisée au dessus d'un tableau de bord IP à travers un moyen optique 2, notamment un miroir.

Comme l'on peut le voir dans la figure 2, l'image ou champ de vision IV de l'utilisateur du dispositif d'affichage 10 peut comprendre une première zone Z1 et une deuxième zone Z2 qui peuvent représenter le même contenu d'information dans des tailles différentes notamment dans des tailles de chiffres ou de signes différentes. Par exemple, dans la deuxième zone Z2 une représentation agrandie d'une information peut être représentée par rapport à une information représentée dans la première zone Z1. Ainsi, il est avantageusement possible que l'utilisateur du dispositif d'affichage 10 peut choisir deux façons de représentation de l'information. Il est également prévu selon la présente invention que la représentation selon la première zone d'affichage Z1 est variée ou changée pour résulter dans une représentation de l'information dans la deuxième zone d'affichage Z2 de manière automatique lorsque l'information représentée augmente d'importance.

Selon la présente invention, le premier ou deuxième mode d'opération du dispositif d'affichage 10 est choisi en dépendance d'une information de sélection. L'information de sélection est, selon un mode de fonctionnement non couvert par l'invention, obtenue grâce à une interface personne-machine qui est réalisé en tant que partie du dispositif d'affichage ou qui est réalisé en tant que associé au dispositif d'affichage, notamment en faisant partie du véhicule automobile, dans lequel le dispositif d'affichage est monté. Normalement, l'utilisateur du dispositif d'affichage 10 peut. à travers une interaction de l'utilisateur avec interface personne-machine, changer l'information de sélection de telle manière à ce qu'un autre mode d'opération du dispositif d'affichage est réalisé ou appliqué.

Il est prévu, selon la présente invention, que la capabilité de vue de l'utilisateur du dispositif d'affichage 10 est mesurée à travers un moyen de mesure de manière automatique. Ainsi, l'information de sélection ou l'information lequel des différents modes d'opération du dispositif d'affichage sont appliqués, sont obtenus automatiquement et sans interaction avec l'utilisateur.

Le dispositif d'affichage 10, selon la présente invention, est notamment prévu en tant que dispositif d'affichage du type tête haute (HUD, head up display).

### Liste des signes de référence :

- 10: dispositif d'affichage
- 2: moyen optique / miroir
- 3: oeil d'un utilisateur
- IP: tableau de bord
- IV: image virtuelle
- Z1: première zone d'affichage
- Z2: deuxième zone d'affichage
- 11: module de projection
- 12: chemin optique
- 13: élément de réflexion
- 14: pare-brise
- 15: direction normale de regard d'un utilisateur du dispositif d'affichage

## Revendications

1. Dispositif d'affichage (10), notamment pour véhicule automobile, comprenant
-- un module de projection (11) et
-- un chemin optique (12)
le chemin optique (12) comprenant au moins un élément de réflexion (13), l'élément de réflexion (13) étant prévu pour réfléchir au moins partiellement une image provenant du module de projection (11) dans une direction normale de regard (15) d'un utilisateur du dispositif d'affichage,
l'image provenant du module de projection (11) étant générée par le module de projection (11),
le dispositif d'affichage (10) étant prévu pour être opéré dans un premier mode d'opération et dans un deuxième mode d'opération,
une première configuration du chemin optique (11) étant appliquée dans le premier mode d'opération du dispositif d'affichage (10), et une deuxième configuration du chemin optique (11) est appliquée dans le deuxième mode d'opération du dispositif d'affichage (10),
dans le deuxième mode d'opération du dispositif d'affichage (10), au moins une partie de l'image générée par le module de projection (11) étant visible pour l'utilisateur du dispositif d'affichage (10) de manière agrandie par rapport au premier mode d'opération du dispositif d'affichage (10),
**caractérisé en ce**
**que** dans le deuxième mode d'opération du dispositif d'affichage (10), seulement une partie de l'image générée par le module de projection (11) est visible pour l'utilisateur du dispositif d'affichage (10), et
**qu'**une information de sélection est transmise au dispositif d'affichage (10) tel que le dispositif d'affichage (10) est opéré, soit suivant le premier mode d'opération, soit suivant le deuxième mode d'opération, en dépendance de l'information de sélection, l'information de sélection étant générée suite à une identification de l'utilisateur du dispositif d'affichage (10).

2. Dispositif d'affichage (10) selon l'une quelconque des revendications précédentes, **caractérisé en ce que** dans le deuxième mode d'opération du dispositif d'affichage (10), toute l'image générée par le module de projection (11) est visible pour l'utilisateur du dispositif d'affichage (10).

3. Dispositif d'affichage (10) selon l'une quelconque des revendications précédentes, caractérisé en ce
-- que l'image générée par le module de projection (11) est une image comprenant un premier nombre d'éléments d'image (pixel) dans une première direction de l'image et comprenant un deuxième nombre d'éléments d'image (pixel) dans une deuxième direction de l'image, et
-- que dans le deuxième mode d'opération du dispositif d'affichage (10), un troisième nombre d'éléments d'image dans la première direction de l'image et un quatrième nombre d'éléments d'image dans la deuxième direction de l'image est visible pour l'utilisateur du dispositif d'affichage (10), le troisième nombre d'éléments d'image étant inférieure au premier nombre d'éléments d'image et/ou le quatrième nombre d'éléments d'image étant inférieure au deuxième nombre d'éléments d'image.

4. Dispositif d'affichage (10) selon l'une quelconque des revendications précédentes, **caractérisé en ce que** le dispositif d'affichage (10) comprend un module d'affichage du type à cristaux liquides (LCD).

5. Dispositif d'affichage (10) selon l'une quelconque des revendications précédentes, **caractérisé en ce que** le dispositif d'affichage (10) comprend un module d'affichage du type matriciel.

6. Dispositif d'affichage (10) selon l'une quelconque des revendications précédentes, **caractérisé en ce que** l'élément de réflexion (13) est un élément positionné en écart par rapport à un pare-brise (14) du véhicule automobile.

## Patentansprüche

1. Anzeigevorrichtung (10), insbesondere für ein Kraftfahrzeug, umfassend
- ein Projektionsmodul (11) und
- einen Strahlengang (12)
wobei der Strahlengang (12) mindestens ein Reflexionselement (13) umfasst,
wobei das Reflexionselement (13) vorgesehen ist, um ein von dem Projektionsmodul (11) stammendes Bild zumindest teilweise in eine normale Blickrichtung (15) eines Benutzers der Anzeigevorrichtung zu reflektieren,
wobei das von dem Projektionsmodul (11) stammende Bild durch das Projektionsmodul (11) erzeugt wird,
wobei die Anzeigevorrichtung (10) dazu vorgesehen ist, in einem ersten Betriebsmodus und in einem zweiten Betriebsmodus betrieben zu werden,
wobei eine erste Konfiguration des Strahlengangs (11) in dem ersten Betriebsmodus der Anzeigevorrichtung (10) angewandt wird und eine zweite Konfiguration des Strahlengangs (11) in dem zweiten Betriebsmodus der Anzeigevorrichtung (10) angewandt wird,
wobei in dem zweiten Betriebsmodus der Anzeigevorrichtung (10) zumindest ein Teil des von dem Projektionsmodul (11) erzeugten Bildes für den Benutzer der Anzeigevorrichtung (10) auf vergrößerte Weise im Verhältnis zu dem ersten Betriebsmodus der Anzeigevorrichtung (10) sichtbar ist,
**dadurch gekennzeichnet,**
**dass** in dem zweiten Betriebsmodus der Anzeigevorrichtung (10) nur ein Teil des von dem Projektionsmodul (11) erzeugten Bildes für den Benutzer der Anzeigevorrichtung (10) sichtbar ist und
**dass** eine Auswahlinformation an die Anzeigevorrichtung (10) übertragen wird, sodass die Anzeigevorrichtung (10) entweder gemäß dem ersten Betriebsmodus oder gemäß dem zweiten Betriebsmodus je nach der Auswahlinformation betrieben wird, wobei die Auswahlinformation nach einer Identifizierung des Benutzers der Anzeigevorrichtung (10) erzeugt wird.

2. Anzeigevorrichtung (10) nach einem der vorhergehenden Ansprüche, **dadurch gekennzeichnet, dass** in dem zweiten Betriebsmodus der Anzeigevorrichtung (10) jedes von dem Projektionsmodul (11) erzeugte Bild für den Benutzer der Anzeigevorrichtung (10) sichtbar ist.

3. Anzeigevorrichtung (10) nach einem der vorhergehenden Ansprüche, **dadurch gekennzeichnet,**
- **dass** das von dem Projektionsmodul (11) erzeugte Bild ein Bild ist, das eine erste Anzahl von Bildelementen (Pixeln) in einer ersten Bildrichtung umfasst und eine zweite Anzahl von Bildelemente (Pixeln) in einer zweiten Bildrichtung umfasst und
- **dass** in dem zweiten Betriebsmodus der Anzeigevorrichtung (10) eine dritte Anzahl von Bildelementen in der ersten Bildrichtung und eine vierte Anzahl von Bildelementen in der zweiten Bildrichtung für den Benutzer der Anzeigevorrichtung (10) sichtbar ist, wobei die dritte Anzahl von Bildelementen kleiner als die erste Anzahl von Bildelementen ist und/oder die vierte Anzahl von Bildelementen kleiner als die zweite Anzahl von Bildelementen ist.

4. Anzeigevorrichtung (10) nach einem der vorhergehenden Ansprüche, **dadurch gekennzeichnet, dass** die Anzeigevorrichtung (10) ein Anzeigemodul vom Flüssigkristalltyp (LCD) umfasst.

5. Anzeigevorrichtung (10) nach einem der vorhergehenden Ansprüche, **dadurch gekennzeichnet, dass** die Anzeigevorrichtung (10) ein Anzeigemodul vom Matrixtyp umfasst.

6. Anzeigevorrichtung (10) nach einem der vorhergehenden Ansprüche, **dadurch gekennzeichnet, dass** das Reflexionselement (13) ein Element ist, das im Verhältnis zu einer Windschutzscheibe (14) des Kraftfahrzeugs beabstandet ist.

## Claims

1. A display device (10), in particular for a motor vehicle, comprising
- a projection module (11), and
- an optical path (12),
said optical path (12) comprising at least one reflecting element (13), wherein said reflecting element (13) is adapted to reflect at least partially an image from the projection module (11) in a normal line of sight (15) of a user of the display device,
the image from the projection module (11) being generated by the projection module (11),
wherein the display device (10) is adapted to be operated in a first mode of operation and in a second mode of operation,
wherein a first configuration of the optical path (11) is applied in the first mode of operation of the display device (10), and a second configuration of the optical path (11) is applied in the second mode of operation of the display device (10),
wherein in the second mode of operation of the display device (10), at least one part of the image generated by the projection module (11) is visible for the user of the display device (10) in a magnified manner relative to the first mode of operation of the display device (10), **characterised in that**
in the second mode of operation of the display device (10), only one part of the image generated by the projection module (11) is visible for the user of the display device (10), and
selection information is transmitted to the display device (10) such that the display device (10) is operated, whether in the first mode of operation or in the second mode of operation, depending upon the selection information, said selection information being generated following an identification of the user of the display device (10).

2. The display device (10) of any of the preceding claims, **characterised in that** in the second mode of operation of the display device (10), the entire image generated by the projection module (11) is visible for the user of the display device (10).

3. The display device (10) of any of the preceding claims, **characterised in that**
- the image generated by the projection module (11) is an image comprising a first number of image elements (pixel) in a first direction of said image and comprising a second number of image elements (pixel) in a second direction of said image, and
- in the second mode of operation of the display device (10), a third number of image elements in the first direction of said image and a fourth number of image elements in the second direction of said image is visible for the user of the display device (10), the third number of image elements being lower than the first number of image elements and/or the fourth number of image elements being lower than the second number of image elements.

4. The display device (10) of any of the preceding claims, **characterised in that** the display device (10) comprises a liquid crystal type display module (LCD).

5. The display device (10) of any of the preceding claims, **characterised in that** the display device (10) comprises a matrix type display module.

6. The display device (10) of any of the preceding claims, **characterised in that** the reflecting element (13) is an element spaced apart from a windshield (14) of a motor vehicle.
